# EUROPEAN PATENT APPLICATION

(11) **EP 0 790 418 A1**
(43) Date of publication of application: **20.08.1997**
(21) Application number: 97102121.7
(22) Date of filing: 11.02.1997
(51) Int. Cl.: F16C 1/26

(54) **A unit for attaching an elongate body, particularly the sheath of a flexible cable, to a support bracket**

(30) Priority: 13.02.1996 IT TO960096
(71) Applicant: SILA HOLDING INDUSTRIALE S.r.l., 10121 Torino (IT)
(72) Inventor: Lomagno, Mauro (IT), 10060 Frossasco (Torino) (IT)
(74) Representative: Marchitelli, Mauro

(57) **Abstract**

An attachment unit for attaching an elongate body (2), particularly the sheath (3) of a flexible cable, to a support bracket (4) includes an abutment member (7) which can be fixed to the elongate body (2) and which defines a shoulder (7c) which can be positioned in face to face contact with a first face of the bracket (4). A seat (7d) adjacent the shoulder (7c) is engageable in a receiving cavity (4a) in the bracket (4). The unit (1) includes a clamp member (14) connected to the abutment member (7) and movable axially relative thereto, which is urged towards the shoulder (7c) by resilient means (15). One face of the clamp member (14) is intended to contact another face of the bracket (4), opposite the first face, under the action of the resilient means (15) so as to clamp the unit (1) to the bracket (4).

## Description

The present invention concerns a unit for attaching an elongate body, particularly the sheath of a flexible cable, to a support bracket, including an abutment member attachable to the elongate body and defining a shoulder which can be positioned in face to face contact with a first face of the bracket and a seat adjacent the shoulder, such a seat being engageable in a receiving cavity of the bracket.

In known devices of the aforesaid type, the bracket which is fixed, for example, to part of a motor-vehicle body, has a circular opening through which the elongate body is inserted axially until its seat is engaged in the opening of the bracket so as to arrange the shoulder of the abutment member against one side of the bracket. In order to clamp the attachment unit to the bracket, it is then necessary to insert a clamp or fixing "clip" in a groove formed alongside the said seat, on the opposite side from the shoulder, in order to form a shoulder opposed to that of the abutment member in such a way as to clamp the entire unit to the bracket.

However, this known solution has the disadvantage that it does not always ensure that the elongate body is clamped in an optimum manner to the bracket in that vibrations or stresses of various types can cause play to develop between the shoulders and the bracket which makes the connection between the body and the bracket ineffective. In some cases, this disadvantage may be critical and may result in the body in question not functioning properly, for example, if the body is the sheath of a flexible cable.

In addition, known attachment units are poorly adapted to automatic assembly in that the fixing clamp must be inserted manually.

In order to overcome these disadvantages, the present invention provides a unit of the aforesaid type, which is characterised in that it includes a clamp member connected to the abutment member and movable axially relative thereto, the clamp member being urged by resilient means towards the said shoulder so that one of its surfaces will bear against another face of the bracket opposite the said first face under the action of the resilient means to clamp the unit with respect to the bracket.

By virtue of these characteristics, the unit according to the invention is particularly suited to automatic assembly. In fact, in this case, the bracket to advantage has a U-shaped receiving cavity which is open to receive the abutment member of the attachment unit, and the member may be coupled to it by means of a single operation which consists of subjecting it to a force directed towards the cavity of the bracket.

Furthermore, the unit according to the invention is able to recover automatically any play should this arise between it and the bracket since, due to the presence of the resilient means, the clamp member always tends to be clamped against the bracket so as to eliminate any play in the system whenever it tends arise.

Further characteristics and advantages of the present invention will become clearer from the following detailed description, given by way of non-limitative example and with reference to the accompanying drawings, in which:

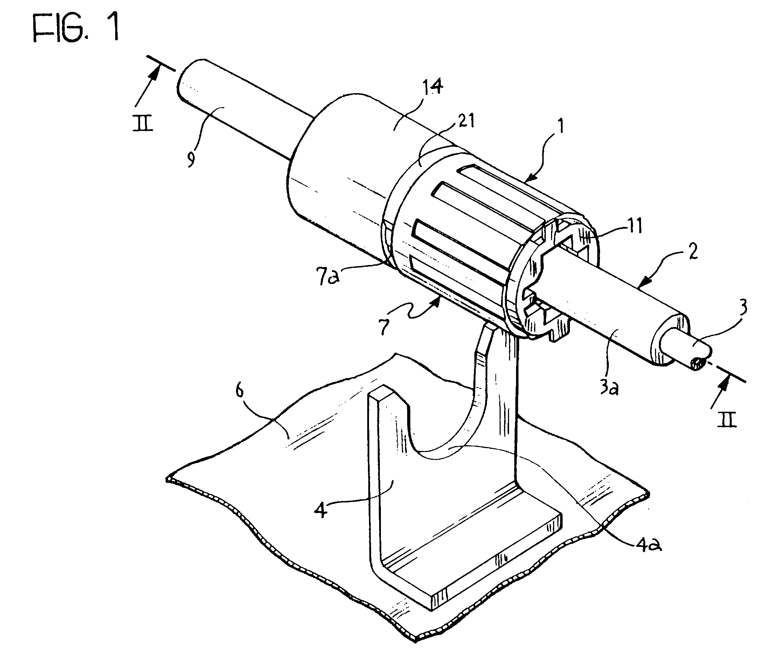

Figure 1 is a perspective view of an attachment unit according to the invention separated from the respective support bracket, in a prior to the montage condition;

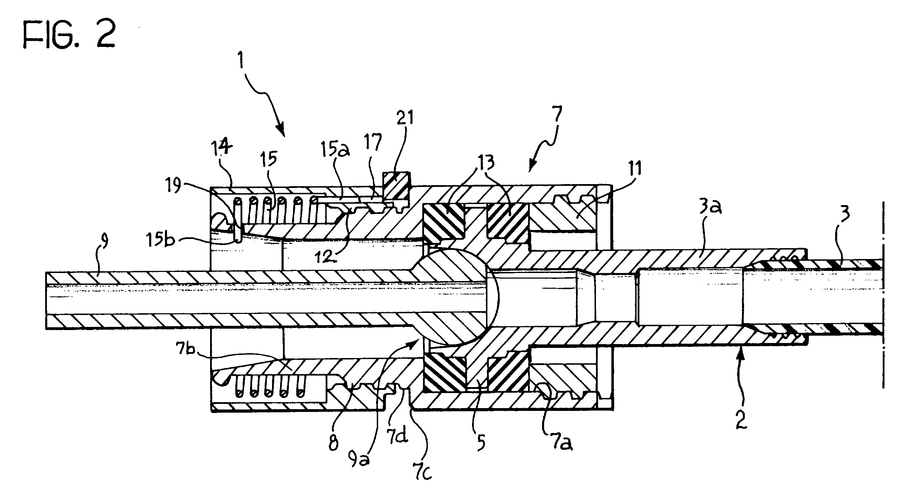

Figure 2 is a sectional view taken along the line II-II of figure 1;

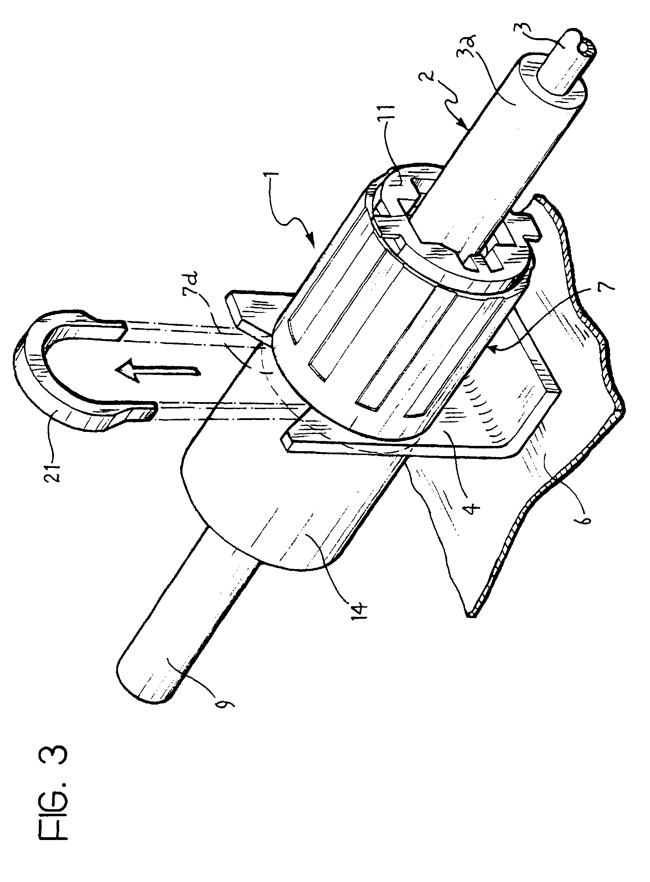

Figure 3 is a view similar to that of figure 1, illustrating the condition in which the unit is coupled with the bracket; and

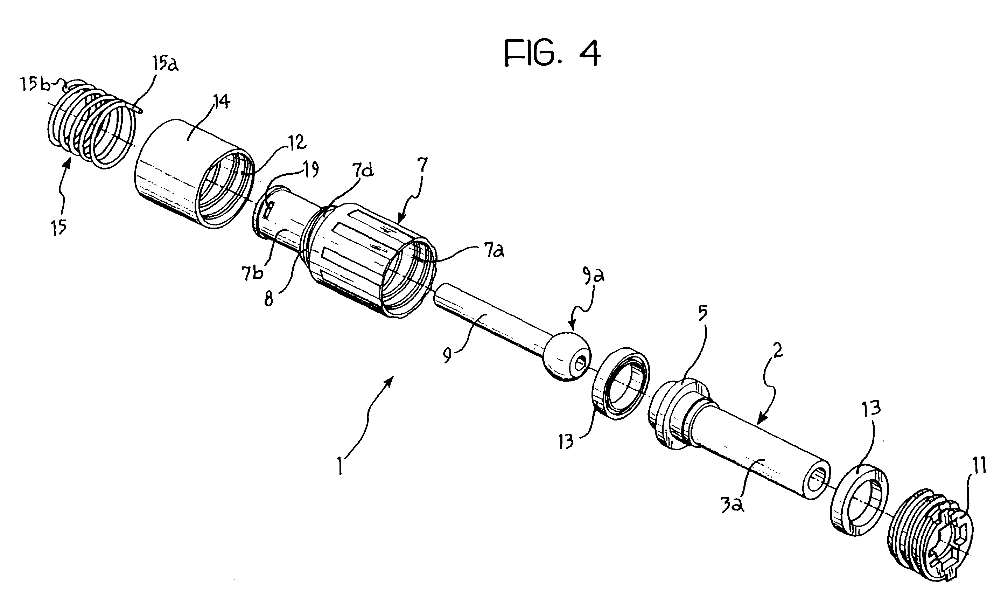

Figure 4 is an exploded perspective view of the unit according to the invention.

With reference to the drawings, the reference numeral 1 indicates an attachment unit for attaching an elongate body 2 to a bracket 4 which is fixed, for example, to a motor-vehicle body part 6. The bracket 4 is generally U-shaped so as to present a receiving cavity 4a which opens away from the fixing part 6.

The elongate body 2 considered in the following description is the sheath 3 of a flexible cable of the "push-pull" type, also known as a Bowden cable, although the present invention may also easily be applied to other bodies of elongate shape.

A cylindrical terminal 3a is normally fixed to the sheath 3 and has an external radial flange 5 to unable the terminal 3a to be clamped inside a tubular abutment member 7 of the unit 1. Associated with the terminal 3a, on its side opposite the sheath 3, is a guide sleeve 9 which is articulated to the sheath by means of a ball joint 9a in such a way that the sleeve 9 can pivot relative to the terminal 3a and the abutment member 7 so as to allow the cable (not illustrated in the drawings) slidable in the sheath 3 to flex.

To fix the terminal 3a, and hence the sheath 3, to the member 7, the flange 5 is positioned within a coaxial cavity 7a in the member 7, which is bounded radially by a tubular wall, and is then locked therein by means of a plug 11 with a central hole for the passage of the terminal 3a. The plug 11 may, to advantage, be connected to the member 7 in the cavity 7a by means of male-female screw coupling or other known connection.

Two elastomeric rings 13 are preferably interposed between the flange 5 and a pair of opposing shoulders of the member 7, the first formed by a radial wall of the member 7 facing the cavity 7a and the second constituted by an end surface of the plug 11 facing the flange 5.

In addition, the member 7 has a coaxial tubular cylindrical projection 7b which extends in the opposite direction with respect to the cavity 7a and has a smaller outer diameter than the wall bounding the cavity so as to form a shoulder 7c intended to be disposed in face to face contact with a face of the bracket 4. Furthermore, a seat 7d for the bracket 4 is formed alongside the shoulder 7c, preferably being circular in shape in order to complement the shape of the bottom of the receiving cavity 4a of the bracket 4.

Close to the seat 7d, the cylindrical projection 7b has a an external thread 8 for engagement by a corresponding internal thread 12 of a sleeve 14. The engagement of the threads 8 and 12 enables the sleeve 14 to rotate and slide simultaneously relative to the axis of the member 7 in such a way as to move closer to or away from the shoulder 7c.

In addition, a helical spring 15 is operatively interposed between the sleeve 14 and the member 7, the first end 15a of the spring 15 extending axially so as to engage a hole 17 formed in the sleeve 14 parallel to the axis of the member 7, while the second end 15b thereof is hook-shaped.

This hook is intended to engage an opening 19 formed close to the free end of the cylindrical projection 7b.

The spring 15 keeps the sleeve 14 under torsional stress so that, by virtue of the male-female coupling with the member 7, it tends to be clamped against the bracket 4. In this way, the unit according to the invention is able to take up any play that may arise between it and the bracket 4 automatically.

The inclination of the threads 8 and 12 is preferably chosen such that the male-female coupling constituted thereby is irreversible in the presence of forces applied along the axis of the stop member 7. In this way, a force acting on the member 7 tending to separate the bracket 4 from the shoulder 7c cannot rotate the sleeve 14 relative to the member 7 whereby, once the attachment unit 1 has been mounted on the associated bracket 4, it can only clamp the bracket 4 more firmly.

A removable spacer element 21 which is substantially U-shaped or horseshoe-shaped is also associated with the unit 1 before its assembly on the respective bracket.

The spacer element 21 is inserted in correspondence of the seat 7d, and hence between the shoulder 7c and the sleeve 14, in order to keep the sleeve 14 and the shoulder 7c spaced axially from each other to facilitate the insertion of the bracket 4 in the seat. During the insertion of the unit 1 into the bracket 4, which may easily be achieved by placing the unit 1 alongside the bracket 4 so that the seat 7d is aligned with the bracket and then pushing the unit 1 directly towards the receiving cavity 4a, the spacer element 21 interferes with the side arms of the bracket 4 so that it is forced radially out of the seat 7d, leaving the space free for the bracket itself. The simplicity with which the unit according to the invention may be inserted in the associated bracket makes it particularly suitable for automated assembly, for example, by means of robotized devices.

## Claims

1. A unit for attaching an elongate body, particularly the sheath of a flexible cable, to a support bracket (4), including an abutment member (7) attachable to the elongate body (2) and defining a shoulder (7c) which can be positioned in face to face contact with a first face of the bracket (4) and a seat (7d) adjacent the shoulder (7c), such a seat (7d) being engageable in a receiving cavity (4a) of the bracket (4), characterised in that it includes a clamp member (14) connected to the abutment member (7) and movable axially relative thereto, the clamp member (14) being urged by resilient means (15) towards the said shoulder (7c) so that one of its surfaces will bear against another face of the bracket (4) opposite the said first face under the action of the resilient means (15) to clamp the unit (1) with respect to the bracket (4).

2. A unit according to Claim 1, characterised in that the clamp member (14) is connected to the abutment member (7) by means of a male-female screw coupling (8, 12).

3. A unit according to Claim 2, characterised in that the clamp member includes a sleeve (14) coaxial with the abutment member (7), the sleeve (14) having an internal thread (12) which engages a corresponding thread (8) formed on the abutment member (7) close to the said seat (7d).

4. A unit according to Claim 2 or Claim 3, characterised in that the male-female screw coupling (8, 12) is realised in order to be irreversible when forces are applied along the axis of the abutment member (7).

5. A unit according to any one of Claims 1 to 5, characterised in that the resilient means comprise an helical spring (15).

6. A unit according to Claim 5, characterised in that one end (15a) of the helical spring (15) is attached to the sleeve (14) and the other end (15b) of the spring (15) is connected to the abutment member (7), in such a way that the sleeve (14) is urged to rotate relative to the abutment member (7).

7. A unit according to any one of Claims 1 to 6, characterised in that the sheath (3) of a flexible cable is attached to the abutment member (7).

8. A unit according to Claim 7, characterised in that the sheath (3) has a cylindrical terminal (3a) with a radial flange (5) for connecting it to the abutment member (7), a pair of annular elements (13) of elastomeric material being interposed between the flange (5) and a pair of opposing shoulder surfaces of the abutment member (7) on opposite sides of the flange (5).

9. A unit according to Claim 8, characterised in that the cylindrical terminal (3a) of the sheath (3) is associated with ball-joint articulation means (9a) which can pivot to allow the cable to flex relative the sheath (3).

10. A unit according to any one of Claims 1 to 9, characterised in that it includes a substantially U-shaped removable spacer element (21) adapted to be interposed between the shoulder (7a) of the abutment member (7) and the clamp member (14) before the unit (1) is mounted to the bracket (4), this spacer element (21) being intended to be removed radially relative to the abutment member (7) as a result of the engagement of the unit (1) in the bracket (4).
